# FASCICULE DE BREVET EUROPEEN

(11) **EP 2 035 204 B1**
(45) Date de publication et mention de la délivrance du brevet: **08.09.2010**
(21) Numéro de dépôt: 07730202.4
(22) Date de dépôt: 15.06.2007
(51) Int. Cl.: B29C 41/04, F17C 1/16, B29C 41/06

(54) **PROCEDE DE FABRICATION D'UNE VESSIE D'ETANCHEITE EN POLYMERE THERMODURCISSABLE POUR UN RESERVOIR CONTENANT UN FLUIDE SOUS PRESSION, TEL QU'UN RESERVOIR COMPOSITE, ET RESERVOIR**
VERFAHREN ZUR HERSTELLUNG EINER DICHTUNGSBLASE AUS EINEM WÄRMEHÄRTBAREN POLYMER FÜR DRUCKFLUID ENTHALTENDEN BEHÄLTER WIE ZUM BEISPIEL EINEN VERBUNDBEHÄLTER UND BEHÄLTER
METHOD FOR MANUFACTURING A SEALING BLADDER MADE OF THERMOSETTING POLYMER FOR A TANK CONTAINING A PRESSURIZED FLUID, SUCH AS A COMPOSITE TANK, AND A TANK

(30) Priorité: 16.06.2006 FR 0652152
(43) Date de publication de la demande: 18.03.2009
(73) Titulaire: Commissariat à l'Énergie Atomique et aux Énergies Alternatives, 75015 Paris (FR); Raigi, 28310 Rouvray Saint Denis (FR)
(72) Inventeur: MAZABRAUD, Philippe, 45000 Orleans (FR); NONY, Fabien, F-37260 Monts (FR); DELEUZE, Charles, 37260 Monts (FR); PERRIER, Olivier, 45170 Neuville Aux Bois (FR); ROCLE, Dominique, 45400 Fleury Les Aubrais (FR); DOULIN, Gwénaël, 01100 BELLIGNAT (FR); TCHARKHTCHI, Abbas, 94240 L'hay Les Roses (FR); LUCAS, Albert, 92100 Boulogne Billancourt (FR)
(74) Mandataire: Ilgart, Jean-Christophe
(86) Numéro de dépôt international: PCT/EP2007/055971
(87) Numéro de publication internationale: WO 2007/144426

(56) Documents cités:
- EP-A- 0 710 610
- DE-A1- 10 049 757
- FR-A- 2 871 091
- FR-A1- 2 178 759
- FR-A1- 2 567 608
- FR-A1- 2 813 235
- JP-A- 7 167 392
- NL-A- 7 304 815
- US-A- 4 183 883
- US-A1- 2003 111 473

## Description

### DOMAINE TECHNIQUE

La présente invention se rapporte à un procédé de fabrication d'une vessie ou enveloppe en polymère assurant l'étanchéité interne d'un réservoir vis-à-vis d'un fluide sous pression qui s'y trouve contenu, le réservoir étant un réservoir tel qu'un réservoir composite, par exemple un réservoir de type IV.

L'invention a également trait au réservoir tel qu'un réservoir composite, par exemple un réservoir de type IV comprenant une enveloppe ou vessie d'étanchéité susceptible d'être obtenue par ce procédé.

Le domaine technique de l'invention peut de manière générale, être défini comme celui du stockage de fluides et en particulier de gaz sous pression, c'est-à-dire à une pression supérieure à la pression atmosphérique avec un intérêt particulier pour le gaz naturel, l'air comprimé, les gaz neutres ou inertes, le gaz naturel, et surtout pour l'hydrogène.

Les enveloppes ou vessies d'étanchéité de la présente invention peuvent être utilisées par exemple pour la fabrication de réservoirs composites, par exemple de réservoirs composites de type IV ou d'accumulateurs hydrauliques.

Les réservoirs composites sont des réservoirs dans lesquels la pression des fluides notamment des gaz stockés est généralement de 10⁶ à 10⁸ Pa, plus précisément de 10⁷ à 10⁸ Pa (c'est-à-dire 100 à 1000 bars) . Leur structure doit donc être prévue d'une part pour être étanche aux fluides par exemple aux gaz stockés, et d'autre part pour supporter les pressions de stockage (appelées pression de service), et les conditions de remplissage (pression, vitesse de remplissage et nombre de remplissages) de ces fluides tels que des gaz.

C'est pourquoi ces réservoirs comprennent une vessie interne d'étanchéité au gaz, appelée aussi « liner » (terme anglais) interne, et une structure de renfort externe habituellement constituée de fibres de carbone et d'une résine thermodurcissable habituellement une résine époxyde.

Cette vessie peut être métallique par exemple en aluminium ou en acier ou bien cette vessie peut être en un polymère, généralement thermoplastique.

Dans ce dernier cas, on parle alors de réservoir composite de type IV.

La vessie d'étanchéité est une structure de révolution, généralement sans soudure et homogène, présentant des propriétés améliorées de perméabilité (ou propriétés de barrière) aux fluides tels que les gaz et de tenue mécanique. La vessie d'étanchéité est équipée d'une ou deux embases à une ou à ses deux extrémités.

La vessie d'étanchéité en polymère peut être obtenue par extrusion-soufflage, par extrusion ou par rotomoulage, et notamment par rotomoulage réactif qui est la technique à laquelle on s'intéressera plus particulièrement dans la présente invention. La structure de renfort externe peut être obtenue par exemple par enroulement filamentaire.

La présente invention trouve notamment son application dans la fabrication de piles à combustible basse température par exemple à membrane échangeuse de protons (« proton exchange membrane fuel cell » ou « PEMFC » en anglais).

Dans la description ci-dessous, les références entre crochets ([ ]) renvoient à la liste des références présentée après les exemples.

### Art antérieur

Les réservoirs de type IV ont été développés dans les années 1990, d'abord pour le stockage embarqué du gaz naturel avec des vessies en polyéthylène, et, plus récemment, à partir de 1997 essentiellement, pour le stockage de l'hydrogène.

Les vessies polymères actuellement utilisées sont en polymère thermoplastique, et sont en grande majorité constituées de polyéthylènes (PE). Ces polyéthylènes sont le plus souvent des polyéthylènes de haute densité (HDPE), parfois réticulés (XHDPE). D'autres vessies thermoplastiques sont constituées de polyamide (PA) (le plus souvent appelé « Nylon » (marque de commerce)) de type PA6, et plus rarement PA12 ou 11, car ils présentent des propriétés barrières aux gaz intrinsèquement meilleures que le polyéthylène.

Cependant, leur ductilité est souvent moins bonne que celle du polyéthylène et leur comportement thermomécanique n'est pas toujours acceptable. Des PA6 spécifiques peuvent être utilisés afin de combiner un bon comportement mécanique avec de bonnes performances barrières aux gaz et notamment à l'hydrogène. Le document **[1]** décrit de tels PA6 et un procédé de fabrication d'une vessie en polymère pour un fluide sous pression d'au moins 50 bars, réalisé dans un moule de rotation.

Enfin, d'autres thermoplastiques peuvent être utilisés parce qu'ils présentent de bonnes propriétés barrières aux gaz, tels que le poly(difluorure de vinylidène) (PVDF). On peut aussi mettre en oeuvre des solutions multicouches avec une couche barrière en copolymère éthylène-alcool vinylique (EVOH). Les documents **[3]** et **[4]** décrivent de tels thermoplastiques. Cependant, leur ductibilité est souvent insuffisante pour pouvoir les utiliser comme constituant de vessies d'étanchéité de réservoirs composites et notamment de réservoirs de type IV.

La plupart du temps, ces vessies sont obtenues par rotomoulage ou extrusion et/ou soufflage du matériau thermoplastique en fusion. Ainsi, dans le document **[5],** il est mentionné que la vessie thermoplastique est obtenue par extrusion-soufflage ou rotomoulage, en utilisant de préférence un polyéthylène haute ou moyenne densité. Dans le document **[6],** des vessies d'étanchéité en polyéthylène, en polypropylène ou en polyamide sont obtenues par rotomoulage. Dans le document **[7],** il est précisé que la vessie en nylon 11 est réalisée par rotomoulage. Dans le document **[8],** il est mentionné que la vessie est obtenue à partir d'un matériau thermoplastique qui est extrudé, soufflé ou rotomoulé. Dans les documents **[9]** et **[10],** il est mentionné que la vessie thermoplastique peut être moulée par extrusion, soufflage ou par rotomoulage.

Le document **[11]** décrit un procédé destiné à fabriquer par rotomoulage ou par extrusion-soufflage une vessie thermoplastique sans soudure d'un réservoir composite à pression ayant un échangeur de chaleur interne.

Le document **[12]** décrit un procédé de fabrication d'un réservoir à pression, procédé dans lequel on introduit dans un moule inerté par un gaz neutre, un monomère qui est ensuite polymérisé à une température élevée dans le moule en rotation.

Dans le document **[13],** un procédé de fabrication d'un réservoir à pression est décrit : il s'agit d'un procédé dans lequel le « liner » est un polymère thermoplastique obtenu par rotomoulage.

Le document **[14]** décrit un procédé de fabrication d'une vessie thermoplastique fine d'un réservoir composite à haute pression.

Tous les documents (brevets et demandes de brevets) mentionnés ci-dessus ne décrivent que des procédés dans lesquels la vessie d'étanchéité est réalisé en un polymère thermoplastique.

Dans les documents **[15]** et **[16],** il est mentionné un procédé de fabrication d'un réservoir composite pour le stockage sous pression du gaz naturel dont le « liner » peut être obtenu à partir de précurseurs liquides, à savoir : « Teflon » (marque de commerce), un isocyanate, un uréthane ou un silicone. Cependant, ces précurseurs sont ajoutés à l'intérieur de la coque composite préalablement formée et jouent le rôle d'un dépôt fin (« coating » en anglais) et non d'une vessie d'étanchéité généralement autosupportée au sens de l'invention.

Les documents **[17]** et **[18]** décrivent un procédé de fabrication de réservoirs à pression autonomes pour l'air comprimé, dont la vessie d'étanchéité flexible peut être en polyuréthanne. La forme de la vessie utilisée par ce procédé est constituée de plusieurs alvéoles et l'architecture du réservoir obtenu est différente de celle d'un réservoir au sens de l'invention . De plus, ce concept tubulaire ne permet pas d'utiliser le réservoir à des pressions élevées.

Les documents **[19]** et **[20]** décrivent également un procédé de fabrication de réservoirs à pression autonomes pour l'air comprimé et citent des applications possibles pour le stockage de l'hélium, de l'azote ou de l'hydrogène par exemple. La vessie d'étanchéité interne peut être en polyéthylène ou en polyamide. Cette vessie est obtenue par injection, par extrusion-soufflage ou par rotomoulage. La vessie d'étanchéité interne peut être également en un polyuréthanne thermoplastique de marque commerciale « Pellethane » (fournisseur : DOW) ou de marque commerciale « Texin » (fournisseur : Bayer Plastics Division).

La mise en oeuvre d'un polymère thermodurcissable n'est ni décrite ni suggérée dans ces documents [19] et [20].

Le procédé de fabrication de la vessie en polyuréthane thermoplastique n'est en outre pas mentionné. La forme de la vessie utilisée par ce procédé est généralement différente de celle de la présente invention car elle comporte au moins deux canaux interconnectés. L'architecture du réservoir obtenu est différente de celle du réservoir (notamment de type IV) de la présente invention

Les réservoirs usuels de type IV décrits par exemple dans le document **[21]** pour le stockage des gaz, particulièrement le gaz naturel et l'hydrogène à des pressions de service de 350 à 700 bars, notamment, utilisent tous des vessies internes en polymère thermoplastique.

Les documents **[22]** à **[28]** décrivent l'état de la technique actuel, les développements en cours et surtout quels sont les thermoplastiques utilisés pour la fabrication des vessies d'étanchéité dans les réservoirs de type IV, en vue d'une application dans les piles à combustible. Mais, aucun de ces documents ne mentionne ni ne suggère d'éléments, ou vessies d'étanchéité (« liner » en terme anglais) en polymère thermodurcissable ni leur fabrication.

Un paramètre important du cahier des charges fixé pour le stockage embarqué de l'hydrogène pour les véhicules à piles à combustibles (voir tableau 1) est le débit de remplissage des réservoirs (« refueling rate » en anglais).

**Tableau 1 : cahier des charges du DOE américain pour le stockage embarqué de l'hydrogène (application aux véhicules à piles à combustible) [29]**

| **Paramètre** | **2005** | **2010** | **2015** |
|---|---|---|---|
| Energie spécifique utilisable | 1,5 | 2,2 | 3 |
| (kWh/kg) | | | |
| Densité d'énergie utilisable | 1,2 | 1,5 | 2,7 |
| (kWh/L) | | | |
| Coût | $6 | $4 | $2 |
| ($/kWh) | | | |
| Durée de vie en nombre | 500 | 1000 | 1500 |
| de remplissages (1/4 du réservoir à plein) | | | |
| Débit de remplissage (kg H₂/min) | 0,5 | 1,5 | 2 |
| Perte d'hydrogène autorisée | 1 | 0,1 | 0,05 |
| (grammes) | | | |

Les documents **[30]** à **[35]** décrivent les effets du remplissage rapide au gaz hydrogène sur la température des vessies d'étanchéité des réservoirs composites dont la pression est de 350 (35 MPa ; 5000 Psi) et 700 bars (70 MPa ; 10 000 Psi). Compte tenu de la forme et du volume du réservoir et de la procédure de remplissage (température du gaz à l'entrée du réservoir, vitesse et débit du remplissage, ...), la température du gaz au contact de la surface interne de la vessie peut être plus ou moins élevée et se situe généralement entre 50 et 150°C. Parfois, cette température est suffisamment élevée pour entraîner la fusion locale du polymère thermoplastique, pouvant entraîner une augmentation du taux de fuite du réservoir et/ou la rupture mécanique de la vessie.

La technologie actuelle du rotomoulage de matériaux thermoplastiques en fusion présente un intérêt particulier. En effet, elle permet :
- de pouvoir fabriquer des pièces creuses de grande dimension, allant jusqu'à 150 litres, voire au-delà ;
- de pouvoir insérer une ou plusieurs embase(s) (c'est-à-dire des embouts de raccordement permettant de remplir la vessie de gaz et de la vider), et ceci, sans collages ultérieurs à la mise en oeuvre ; et
- de fournir des vessies d'étanchéité épaisses homogènes et sans contraintes mécaniques résiduelles.

Dans tous ces procédés, le matériau thermoplastique est fondu pour être mis en forme à la géométrie de la vessie désirée, puis doit être refroidit avant d'être démoulé. De nombreux défauts de la vessie résultent de cette fusion, notamment la formation de réticulas, d'infondus, de microporosités, et d'oxydations du matériau thermoplastique. Ces défauts nuisent aux performances finales d'étanchéité et/ou de tenue mécanique de la vessie, et donc aux performances du réservoir. De plus, dans le cas du rotomoulage, même si le collage ultérieur de l'embase à la vessie n'est pas nécessaire, l'étanchéité entre l'embase et la vessie n'est pas toujours satisfaisante, du fait de la fluidité du matériau thermoplastique en fusion qui est insuffisante pour épouser intimement les formes de l'embase. Par ailleurs, cette fluidité du matériau en fusion ne peut pas être augmentée par élévation de la température sans provoquer une altération chimique dudit matériau. En outre, le procédé de rotomoulage le plus couramment utilisé prend beaucoup de temps, prolongé encore par la durée de refroidissement du matériau après moulage de la vessie, due notamment à l'inertie du moule et/ou de la pièce .

Le polyamide 6 (PA6), est le thermoplastique qui apparaît le plus intéressant pour la fabrication de vessies d'étanchéité, compte tenu du compromis entre ses propriétés barrières aux gaz, notamment hydrogène, et ses propriétés mécaniques sur une large plage de températures allant de -40°C à +100°C. Malheureusement, dans les techniques de l'art antérieur, le PA6 est toujours mal adapté au rotomoulage qui, comme les autres technologies de moulage des matériaux thermoplastiques, nécessite de fondre le matériau sous forme de poudre pour lui donner la forme voulue puis le refroidir. Cette fusion entraîne les défauts identifiés ci-dessus qui nuisent aux performances finales du réservoir.

Le développement de thermoplastiques, par exemple de PA6, de grades plus adaptés au rotomoulage, en terme de teneur en eau des poudres, de viscosité, de masse moléculaire, avec addition d'anti-oxydants, etc. ne permet pas de résoudre ces défauts.

Par ailleurs, l'évolution de la technologie des rotomouleuses, avec des perfectionnements tels que par exemple le rotomoulage sous azote, le refroidissement contrôlé, la diminution du temps de cycle, ne permet pas non plus de résoudre ces défauts.

En effet, par exemple, la fusion du PA6 commence à partir de 200°C environ, et cette étape de fusion occasionne une dégradation chimique car le PA6 doit rester de 5 à 15 minutes à des températures de procédé dépassant parfois de 40°C sa température de fusion.

Récemment la technologie du rotomoulage réactif, décrite notamment dans le document FR-A-2 871 091, a permis de fabriquer des vessies (« liners ») en polyamide 6 à des températures de procédé plus basses (autour de 170°C) qu'avec le rotomoulage classique par voie fondue (autour de 260°C). Mais les temps de cycle restent bien plus long que dans la présente invention. De plus, quel que soit le procédé de rotomoulage utilisé, les vessies (« liners ») thermoplastiques qui sont seules mentionnées dans ce document ont des températures maximales d'utilisation plus basses que dans le cadre de la présente invention, compte tenu de la nature chimique du polymère (thermoplastique et non thermodurcissable).

En outre du fait de la nature thermoplastique des vessies polymères d'étanchéités qu'ils utilisent, les réservoirs sous pression en particulier les réservoirs de type IV de l'art antérieur ne permettent pas de satisfaire aux exigences de remplissage rapide aux gaz, notamment au gaz naturel et à l'hydrogène car les phénomènes physiques qu'engendre ce remplissage rapide entraînent une élévation de la température du gaz qui peut provoquer une modification physico-chimique voire une fusion partielle de la vessie au contact de ce gaz.

Aucun procédé de l'art antérieur n'apporte de solution satisfaisante aux nombreux problèmes précités.

Il existe donc un besoin pour un procédé de préparation d'une vessie en polymère destinée à assurer l'étanchéité d'un réservoir vis-à-vis d'un fluide sous pression qui s'y trouve contenu, qui permette d'obtenir une vessie d'étanchéité pour un réservoir, en particulier un réservoir de type IV, qui ne présente pas les défauts précités. Cette vessie doit notamment pouvoir supporter de plus hautes températures, en particulier lors du remplissage.

Ce procédé doit en outre induire un temps de fabrication réduit.

Ce procédé doit permettre notamment la fabrication d'une vessie de réservoir pour pile à combustible basse température (PEMFC), où le stockage de l'hydrogène effectué sous des pressions allant de 350x10⁵ Pa à 700x10⁵ Pa, voire 1000x10⁵ Pa, nécessite des réservoirs légers, sûrs et peu coûteux, notamment pour le stockage dans des moyens de transport.

Le but de l'invention est de fournir un tel procédé de préparation d'une vessie en polymère qui réponde à l'ensemble des besoins et exigences énumérés ci-dessus.

L'invention a encore pour but de fournir un procédé de préparation d'une vessie en polymère destinée à assurer l'étanchéité d'un réservoir vis-à-vis d'un fluide sous pression qui s'y trouve contenu, qui ne présente pas les inconvénients, défauts, limitations et désavantages des procédés de l'art antérieur et qui résolve les problèmes de l'art antérieur.

### EXPOSÉ DE L'INVENTION

Ce but et d'autres encore sont atteints conformément à l'invention par un procédé de fabrication d'une vessie en polymère assurant l'étanchéité interne d'un réservoir vis-à-vis d'un fluide sous pression qui s'y trouve contenu, ledit fluide étant sous une pression d'au moins 50 bars, de préférence d'au moins 200 bars, de préférence encore d'au moins 350 bars, mieux d'au moins 700 bars ; dans lequel ledit polymère est un polymère thermodurcissable, et ledit procédé comprend au moins une étape de polymérisation d'au moins deux composés précurseurs dudit polymère thermodurcissable réalisé dans un moule en rotation.

Généralement la vessie d'étanchéité est autosupportée.

Généralement la vessie est de forme cylindrique à fonds hémisphériques.

De manière fondamentale selon l'invention, le polymère utilisé pour fabriquer la vessie d'étanchéité est un polymère thermodurcissable et non un polymère thermoplastique.

La mise en oeuvre d'un polymère thermodurcissable pour préparer de telles vessies n'est ni décrite, ni suggérée dans l'art antérieur.

Le procédé de la présente invention ne conduit pas à une vessie thermoplastique comme dans l'art antérieur, mais à une vessie thermodurcissable en partant de précurseurs dudit polymère thermodurcissable dont la polymérisation dans le moule en rotation est initiée, amorcée, démarre à une température inférieure aux températures de mise en oeuvre des polymères thermoplastiques, à savoir une température généralement de 10 à 100°C par exemple de 40°C au lieu d'une température supérieure à 150°C pour les polymères thermoplastiques mis en oeuvre dans l'art antérieur.

La vessie de la présente invention en polymère thermodurcissable, préparée par polymérisation à des températures inférieures, peut à l'inverse, être utilisée à des températures maximales plus élevées que les vessies de l'art antérieur par exemple à de 120 à 150°C au lieu de 60 à 90°C.

La vessie selon l'invention est fabriquée plus rapidement que les vessies de l'art antérieur en polymère thermoplastique par exemple en une durée de 4 à 8 min au lieu de 15 à 60 min.

Le réservoir dont l'étanchéité interne est assurée par la vessie en polymère thermodurcissable par exemple en polyuréthanne préparée par le procédé selon l'invention peut être notamment un réservoir composite, en particulier un réservoir dit de type IV.

Le terme « réservoir composite ou réservoir de type IV » est un terme bien connu de l'homme du métier dans le domaine des réservoirs de fluides sous pression.

Le fluide sous pression contenu dans le réservoir est de préférence un gaz, ou un mélange d'un gaz et d'un liquide, par exemple un mélange d'azote et d'huile minérale.

De manière plus précise, le procédé de fabrication d'une vessie en polymère selon l'invention peut comprendre les étapes successives suivants :
(a) préparation d'un mélange de polymérisation comprenant les composés précurseurs du polymère thermodurcissable, et éventuellement au moins un catalyseur de la polymérisation ;
(b) polymérisation dudit mélange pour obtenir ledit polymère thermodurcissable, dans un moule en rotation, de manière à former ladite vessie par polymérisation desdits précurseurs et rotomoulage simultané du polymère thermodurcissable ;
   (b1) éventuellement répétition des étapes (a) et (b) de façon à obtenir une vessie à plusieurs couches de polymère thermodurcissable ; et
(c) démoulage de la vessie en polymère thermodurcissable obtenue.

Dans la présente invention, le polymère thermodurcissable est fabriqué et moulé en une seule étape dans un moule, généralement à une température peu élevée par exemple de 10°C à 100°C.

Dans le procédé selon l'invention, le polymère se forme en même temps qu'il épouse la forme du moule et ceci généralement en un temps très court. On parle de rotomoulage réactif puisque le moule de rotomoulage sert à la fois de réacteur chimique et de moule donnant la forme de la vessie à proprement parler.

Au contraire des procédés de l'art antérieur où les vessies sont en polymère thermoplastique, le procédé selon l'invention permet d'obtenir des réservoirs, notamment du type IV, par rotomoulage réactif à une température de travail basse par exemple de 10 à 100°C et en un temps court par exemple due 4 à 8 minutes de temps de cycle pour une vessie monocouche.

La réaction de polymérisation des précurseurs par exemple polyol(s) et isocyanate(s) utilisés dans la présente invention est une réaction chimique tout à fait classique, qui permet de polymériser des précurseurs d'un polymère thermodurcissable par exemple d'un polyuréthanne en ledit polymère thermodurcissable. L'homme du métier dans le domaine de la chimie macromoléculaire n'aura aucun mal à mettre en oeuvre cette réaction de polymérisation. Les seules restrictions sont celles indiquées dans la définition du procédé de l'invention, c'est-à-dire celles liées aux spécificités des vessies polymères des réservoirs contenant un fluide sous pression par exemple des réservoirs à gaz de type IV.

En particulier, il est préférable que la vessie obtenue soit étanche au fluide tel qu'un gaz qui y sera stocké, même aux pressions indiquées ci-dessus, soit suffisamment souple pour suivre les déformations de la coque composite sous l'effet de la pression, mais soit suffisamment rigide pour supporter la mise en oeuvre du renfort externe composite, et ait une température de fonctionnement suffisamment élevée pour supporter les remplissages rapides du réservoir.

Selon l'invention, les composés précurseurs du polymère thermodurcissable utilisés sont de préférence des monomères précurseurs du polymère thermodurcissable utilisé pour la fabrication des vessies.

Selon l'invention, de préférence, le polymère thermodurcissable est un polyuréthanne, et les précurseurs comprennent au moins un polyol et au moins un isocyanate, la polymérisation des précurseurs étant une polymérisation par polyaddition.

Le ou lesdits polyols peuvent être choisis parmi les polyéthers polyols tels que les polyoxypropylène glycols, les polyoxyéthylène glycols, les polytetraoxyméthylène glycols et les polyols aminés ;, parmi les polyesters polyols tels que les polyadipates de glycol et les polycaprolactones ; parmi les polycarbonate diols ; parmi les polymères hydroxylés tels que les polybutadiènes hydroxylés ; parmi les polyols d'origine naturelle tels que les huiles de ricin ; ou parmi toutes les molécules dont la chaîne moléculaire présente des groupes hydroxyles libres réactifs.

Les isocyanates peuvent être choisis parmi les mono-, les diisocyanates et polyisocyanates tels que le diphényleméthane diisocyanate (MDI) et ses isomères, le toluène diisocyanate (TDI) et ses isomères, l'isophorone diisocyanate (IPDI), l'hexaméthylène diisocyanate (HMDI), le dicyclohexyleméthane diisocyanate (H12MDI) et toutes les molécules dont la chaine moléculaire présente des groupes isocyanates.

Selon l'invention, la polymérisation des précurseurs est de préférence réalisée en présence d'au moins un catalyseur. Leur rôle dans la polymérisation des précurseurs organiques, tels que les isocyanates et les polyols dans le cas des polyuréthannes, est bien connu de l'homme du métier et ne nécessite pas d'être précisé davantage ici.

On peut citer, à titre d'exemple de catalyseurs, les catalyseurs aminés et les catalyseurs métalliques par exemple à base d'étain ou de bismuth.

Selon l'invention, l'étape consistant à polymériser le monomère dans le moule en rotation ou rotomoule afin de former la vessie en polymère thermodurcissable est avantageusement réalisée à partir d'un mélange de polymérisation comprenant les composés, précurseurs du polymère thermodurcissable, et éventuellement au moins un catalyseur de la polymérisation et éventuellement au moins un additif de polymérisation.

Selon l'invention, le mélange de polymérisation peut être préparé avantageusement à partir de plusieurs « pré »-mélanges, par exemple de 2 à 3 prémélanges, chacun de ces prémélanges contenant chacun de préférence au moins un précurseur du polymère.

Ainsi, les deux prémélanges ou plus peuvent être préparés et stockés séparément plusieurs semaines, voir plusieurs mois avant la fabrication de la vessie et mélangés ensemble au moment de la mise en oeuvre de la présente invention.

Le procédé de la présente invention peut également être mis en oeuvre à partir d'un mélange unique comprenant l'ensemble des précurseurs et autres constituants éventuels, le catalyseur de la polymérisation étant ajouté au moment de la mise en oeuvre du procédé de la présente invention. Le mélange peut également être préparé en totalité extemporanément avant d'être introduit dans le moule. L'homme du métier saura aisément adapter la mise en oeuvre du procédé de la présente invention suivant ce qui lui apparaît le plus pratique.

Des exemples de préparation du mélange de polymérisation sont présentés ci-dessous.

Le mélange des précurseurs utilisés peut se faire à température ambiante, par exemple pour les polyols polyethers, et jusqu'à 100°C environ, par exemple pour les Polyols Polyadipate de Glycol , solides à température ambiante. Il en est de même pour le catalyseur, ainsi que pour tout autre matière ajoutée au mélange de polymérisation.

Selon l'invention, le mélange de polymérisation peut comprendre en outre une ou plusieurs charges et/ou nanocharges.

Les charges ou nanocharges (en fonction de la taille et/ou du facteur de forme des particules qui les composent) permettent avantageusement d'améliorer les propriétés du matériau formant la vessie et notamment d'augmenter la rigidité et/ou les propriétés barrières et/ou d'améliorer les propriétés thermomécaniques et/ou diminuer la perméation et/ou colorer et/ou diminuer le prix de la vessie fabriquée. Les charges ou nanocharges peuvent permettre également d'améliorer la stockabilité des prémélanges et/ou la processabilité du mélanage des précurseurs.

Selon l'invention, les charges et/ou nanocharges peuvent être choisies par exemple parmi les feuillets d'argile, les noirs de carbone, les nanotubes de carbone, les silices, les carbonates, les kaolins, les dolomies et autres charges minérales, les pigments, les zéolites, les charges organiques, et toutes les autres charges ou nanocharges ayant la même fonction.

Par exemple, des feuillets d'argile exfoliés permettent d'améliorer la tenue thermique de la vessie, notamment à l'échauffement lors du remplissage rapide de la vessie en gaz, par exemple en hydrogène. Du fait que la vessie préparée par le procédé selon l'invention est en un polymère thermodurcissable, elle présente déjà une excellente tenue thermique, très supérieure à celle des vessies en polymères thermoplastiques et de ce fait les feuillets d'argile exfoliés peuvent être utilisés en quantités minimales ou même être omis. Quelle que soit la charge ou nanocharge, elle peut être généralement ajoutée au mélange de polymérisation en une quantité allant de 0 à 40% en masse par rapport à la masse totale du mélange de polymérisation introduit dans le moule.

Le mélange de polymérisation peut comprendre en outre un ou plusieurs additifs.

Les additifs permettent avantageusement d'améliorer les conditions de mise en oeuvre des précurseurs et du polymère et d'améliorer les propriétés du matériau formant la vessie et notamment d'augmenter la rigidité et/ou les propriétés barrières, et/ou d'améliorer les propriétés thermomécaniques, et/ou de diminuer la perméation, et/ou de colorer et/ou diminuer le prix de la vessie fabriquée.

Les additifs peuvent permettre également d'améliorer la stockabilité des prémélanges et/ou la processabilité du mélange des précurseurs.

Selon l'invention, les additifs peuvent être choisis parmi les antioxydants (par exemple de type phénoliques ou phénoliques/phosphites), les stabilisants (par exemple de type benzotriazoles ou HALS), les plastifiants (par exemple de type phosphates, phtalates, ...), les agents mouillants (par exemple de type polysiloxanes), les agents débullants (antimousse) (par exemple de type silicones), les colorants, les agents ignifugeants (par exemple de type phospho-halogénés) et les solvants liquides.

Ce ou ces additifs sont généralement ajoutés au mélange de polymérisation en une quantité allant de 0 à 20 % en masse par rapport à la masse totale du mélange réactionnel.

Le mélange de polymérisation peut également comprendre en outre un modificateur de chaîne choisi généralement parmi les composés aminés aromatiques, les diols et les triols.

Dans le cas où l'on met en oeuvre des prémélanges par exemple deux prémélanges et où le polymère est un polyuréthanne, l'un des deux prémélanges (A) peut contenir un ou des polyol(s), éventuellement un (ou des) catalyseur(s), une (ou des) charge(s)et un (ou des) additif(s) ou bien peut contenir un ou des polyols et éventuellement un ou plusieurs modificateurs de chaîne;et l'autre prémélange (B) peut contenir un ou des isocyanates et éventuellement des additifs.

Le prémélange (B) peut contenir par exemple un prépolymère à terminaisons isocyanates obtenu par exemple par réaction de MDI et de polyoxypropylène glycol.

Les prémélanges peuvent être chauffés ou non, dans le cas des prémélanges A (à base de polyol(s)) et B (isocyanate) décrits ci-dessus, ils ne sont pas, de préférence, chauffés.

La quantité de mélange de polymérisation introduite dans le moule détermine, en fonction de la taille du moule, l'épaisseur de la paroi de la vessie fabriquée par le procédé de la présente invention.

Le choix de cette épaisseur de la paroi de la vessie est fait principalement en fonction :
- des performances recherchées de barrière au gaz stocké, par exemple à l'hydrogène, du polymère thermodurcissable, par exemple du polyuréthanne, (pour l'hydrogène, projets de normes ISO TC 197 et EIHP II qui autorisent une fuite de 1 cm³/litre de réservoir/heure) ;
- des performances mécaniques du polymère thermodurcissable, notamment de rigidité suffisante à la mise en place d'un renfort mécanique externe à l'enveloppe, vessie, par exemple par bobinage de fibres de carbone (la vessie servant alors de mandrin), lors de la fabrication du réservoir ; et
- des autres performances mécaniques du polymère thermodurcissable, par exemple : ductilité suffisante, pour ne pas présenter de fatigue lors des nombreux remplissages du réservoir (jusqu'à 15000 cycles) à une température comprise entre -40°C et 85°C et bonne résistance aux températures de remplissage jusqu'à 150°C.

La détermination de l'épaisseur de la paroi de la vessie se décide donc notamment suivant le volume du réservoir fabriqué, le rapport Longueur/Diamètre du réservoir (et donc la surface développée), les contraintes et déformations mécaniques acceptables, les pressions de service, d'épreuve et de rupture du réservoir fabriqué, et le coefficient de perméation du polymère.

Selon l'invention, la vessie a généralement une paroi d'épaisseur définie pour supporter la fuite du fluide, notamment du gaz, à la pression à laquelle il doit être stocké, appelée pression de service telle que définie plus haut, et habituellement comprise entre 2x10⁷ et 10⁸ Pa, de préférence comprise entre 5.10⁷ et 8.10⁷ Pa.

La présente invention s'applique bien entendu à d'autres pressions que celles-ci généralement par exemple de 10⁵ à 10⁸ Pa, l'épaisseur de la vessie étant choisie notamment en fonction de cette pression de service et de la nature du fluide par exemple du gaz.

En général, l'épaisseur de la vessie est de 1 mm à 100 mm, de préférence de 2 mm à 20 mm, de préférence encore de 3 à 10 mm.

Dans le procédé de l'invention, la polymérisation est effectuée dans un moule en rotation ou rotomoule. Pour cela, on peut utiliser une rotomouleuse classique, par exemple telle que celles décrites dans les documents précités relatifs au rotomoulage d'un matériau thermoplastique en fusion. Le site « Internet » de l'Association Francophone de Rotomoulage décrit également de telles rotomouleuses [36]. De préférence le moule de la rotomouleuse est suffisamment étanche aux liquides, en particulier au mélange de polymérisation selon l'invention.

Selon l'invention, la polymérisation est initiée, amorcée à une température que l'on peut qualifier de relativement basse, à savoir de 10 à 100°C, par exemple de 40°C, c'est là un des avantages du procédé selon l'invention que la polymérisation débute, à une température peu élevée, de manière à former ladite vessie par polymérisation desdits précurseurs couplée à un rotomoulage et sans fusion du polymère obtenu. Ainsi, le moule étant mis en rotation, la polymérisation conduit à une formation du matériau thermodurcissable sur toute la surface interne du moule, sans qu'il y ait fusion dudit matériau thermodurcissable.

Préalablement à l'étape (b) avant introduction dans le moule, la température du mélange de polymérisation peut être régulée, ajustée à une valeur de 10 à 100°C par exemple de 25°C, par exemple par chauffage.

Ainsi la polymérisation sera déclenchée dès le début du mélange et potentiellement avant ou dès l'introduction du mélange dans le rotomoule.

Pour les mêmes raisons, selon l'invention, de préférence, la température du moule en rotation ou rotomoule est régulée, par exemple par chauffage, en totalité ou en partie, à une valeur de 10 à 120°C par exemple 40°C, préalablement à l'étape b) de polymérisation et avant introduction dudit mélange de polymérisation dans le moule.

De nouveau, un des nombreux avantages de la présente invention est que la température de polymérisation et a fortiori de fabrication de la vessie est basse.

La régulation thermique peut être réalisée par chauffage total ou partiel du moule.

Le chauffage du moule peut être réalisé par exemple au moyen d'un four dans lequel le moule est introduit. On peut éventuellement se passer de four en utilisant un moule avec chauffage direct, par exemple par des lampes infrarouges (IR), des résistances électriques, un moule double paroi avec circulation d'un fluide caloporteur, ou un chauffage par induction.

Il est dans certains cas possible de ne pas chauffer le moule et par exemple de ne pas utiliser de four lors de la polymérisation elle-même, compte tenu de l'inertie thermique du moule et de la rapidité de la réaction de polymérisation, et du fait que celle-ci est exothermique comme c'est notamment le cas de la réaction des polyols et des isocyanates conduisant aux polyuréthannes.

Le moule en rotation ou rotomoule peut avantageusement être équipé d'un à plusieurs évents et d'une ou plusieurs entrée(s) d'un gaz neutre lorsque la réaction de polymérisation mise en oeuvre doit se faire sous gaz neutre (inerte). Dans ce cas, le moule est alors purgé par un gaz inerte et éventuellement sec lors de la mise en oeuvre de l'étape de polymérisation b). Le gaz neutre, inerte peut être par exemple de l'azote ou tout autre gaz neutre connu de l'homme du métier. Il est à noter que l'utilisation d'un gaz neutre, inerte n'est pas une condition indispensable pour le procédé de la présente invention.

L'homme du métier saura aisément adapter la mise en oeuvre du procédé de l'invention afin que la polymérisation des précurseurs conduise à la fabrication de la vessie souhaitée.

Le moule en rotation ou rotomoule a généralement la forme d'une pièce de révolution creuse.
Le moule a de préférence une forme sensiblement cylindrique à base circulaire, elliptique ou autre et le rapport longueur/diamètre dudit cylindre est généralement de 1 à 50, habituellement de 2 à 10.
Selon l'invention, le moule est mis en rotation suivant deux axes (rotation biaxiale) à savoir un axe primaire et un axe secondaire, de manière à ce que la répartition dudit mélange de polymérisation, des précurseurs, se fasse sur toute la surface interne du moule prévue pour former la vessie, l'enveloppe et conformément à cette surface.
En rotomoulage de matériau thermoplastique selon l'art antérieur, les vitesses de rotation de l'axe primaire et de l'axe secondaire sont entre 1 et 30 tpm (« tpm » : tours par minute), le plus souvent entre 2 et 10 tpm. Dans le procédé de la présente invention, les vitesses de rotation se situent dans le même domaine.
Le temps de gélification et la durée de polymérisation dépendent bien entendu de la nature et/ou de la quantité des précurseurs tels que polyols et isocyanates, ainsi que de la présence éventuelle et de la nature des catalyseurs et charges et/ou additifs éventuels mais également des températures de mise en oeuvre (matière et moule) et de la nature et de l'épaisseur du moule.
Un des nombreux avantages de la présente invention est que les durées de polymérisation peuvent être très rapides. De manière générale, on peut estimer que la réaction de polymérisation et a fortiori de fabrication de la vessie sont terminées en quelques minutes souvent de 4 à 8 minutes pour une vessie monocouche.

Par exemple, lorsque les précurseurs utilisés sont un polyol de type polyether et un isocyanate de type MDI, la polymérisation est terminée après quelques minutes, en général de 2 à 15 minutes, souvent autour de 4 à 8 minutes.

Lorsque la polymérisation (les polymérisations dans le cas de plusieurs couches) est suffisamment avancée, le cas échéant le chauffage est arrêté et/ou le moule en rotation est sorti du four ; la rotation du moule est arrêtée, et le moule est ouvert. On peut éventuellement refroidir le moule quelques minutes, notamment pour faciliter la manutention de la pièce et accélérer le durcissement de la pièce (pour passer à une température inférieure à la Tg, Température de Transition Vitreuse). La vessie est alors démoulée.

Cependant, selon l'invention, il n'est plus nécessaire de refroidir longuement le moule avant le démoulage de la pièce compte tenu du fait que la température de travail est généralement inférieure ou égale à 100°C. Il en résulte un gain de temps et de coûts évident par rapport aux procédés de l'art antérieur, notamment compte tenu de l'inertie du moule, où la température de rotomoulage était bien supérieure à celle utilisée dans le procédé de la présente invention, et où il était nécessaire d'attendre que le matériau passe de l'état fondu à l'état solide.

Selon un mode particulier de réalisation de la présente invention, plusieurs étapes de polymérisation peuvent être réalisées successivement pour former une vessie d'étanchéité à plusieurs couches de polymère thermodurcissable. En d'autres termes, on répète le cycle d'étapes (a) et (b) pour former une vessie d'étanchéité à plusieurs couches de polymères.

Ce cycle peut être répété de 1 à plusieurs fois selon le besoin, par exemple de 1 à 5 fois.

Ces couches peuvent être identiques ou différentes, en épaisseur et/ou en composition.

Ainsi, on peut à partir de la même composition de mélange de polymérisation, ou à partir de compositions différentes réaliser plusieurs polymérisations successives et obtenir une enveloppe, vessie multicouche selon l'invention. Les compositions peuvent être différentes par la concentration de chacun des composants et/ou par la nature des composants de la composition, dans le cadre de la définition du mélange de polymérisation mis en oeuvre selon l'invention. Il suffit d'introduire les mélanges de polymérisation successivement dans le moule, avantageusement juste avant l'achèvement de chaque étape de polymérisation.

Par exemple, pour obtenir des épaisseurs de paroi d'enveloppe supérieures à 6 mm, avantageusement, plusieurs étapes de polymérisation successives peuvent être mises en oeuvre jusqu'à atteindre l'épaisseur souhaitée. Par exemple, il est aisé de faire une épaisseur de polyuréthanne de 10 mm par couche, mais une épaisseur de paroi de 5 mm est préférable. Ainsi, pour une épaisseur de paroi d'enveloppe de 10 mm, il est préférable de faire par exemple deux couches successives de 5 mm ou 3 couches de 3,3 mm.

Par exemple lorsque la couche la plus interne de la vessie, c'est à dire celle qui sera en contact avec le fluide, tel qu'un gaz sous pression, lors de son stockage dans le réservoir composite par exemple le réservoir de type IV fabriqué, doit avoir des propriétés particulières par rapport audit gaz stocké, la dernière étape de polymérisation peut avantageusement être réalisée au moyen d'un polymère thermodurcissable présentant lesdites propriétés particulières par rapport audit gaz stocké.

Par exemple lorsque la couche la plus externe de la vessie, c'est à dire celle qui serait en contact avec la structure de renfort externe d'un réservoir de type IV fabriqué, doit avoir des propriétés particulières par rapport à ladite structure de renfort, la première étape de polymérisation peut avantageusement être réalisée au moyen d'un polymère thermodurcissable présentant ces propriétés particulières par rapport à ladite structure de renfort. Par exemple, il peut s'agir d'une couche externe réalisée avec un Polyuréthanne de plus faible Tg.

Avantageusement, la réaction de polymérisation des polymères thermodurcissables mise en oeuvre selon l'invention étant exothermique, il n'est pas toujours nécessaire de remettre le moule à chauffer pour polymériser chaque couche, une fois la polymérisation de la première couche lancée. En effet, la polymérisation d'une couche peut suffire à maintenir la température suffisante pour la polymérisation de la couche suivante.

Cela est d'autant plus vrai que la polymérisation est selon l'invention initiée, amorcée à une température faible, peu élevée nécessitant peu d'apport de chaleur. En conséquence, avantageusement, on peut commencer l'étape (a) d'un cycle avant que l'étape (b) du cycle précédent ne soit terminée.

Selon l'invention, la vessie, enveloppe, obtenue peut en outre être soumise à un ou plusieurs post-traitement(s) destiné(s) à revêtir sa surface interne ou externe d'une ou de plusieurs couche(s) mince(s) afin d'améliorer encore les propriétés d'étanchéité de la vessie au fluide, tel qu'un gaz, qui y sera stocké (propriétés barrières) et/ou de lui conférer des propriétés chimiques particulière, par exemple de résistance à des attaques chimiques, une qualité alimentaire ou une meilleure tenue aux vieillissements. Ce post-traitement peut consister par exemple en un traitement de dépôt (« coating » en anglais) d'une couche de type SiOₓ, où 0 ≤ x ≤ 2, ou bien de Si_{y}N_{z}Cₜ, où 1 ≤ y ≤ 3, 0,2 ≤ z ≤ 4 et 0 ≤ t ≤ 3, par dépôt en phase vapeur assisté par Plasma (PECVD).

Ce post-traitement peut consister par exemple en un dépôt d'aluminium par dépôt physique en phase vapeur (PVD), ou en un dépôt d'un composé de type époxy par réticulation chimique, ou en une fluoration avec des précurseurs carbofluorés tel que CF₄ ou C₄F₈, par exemple. Les documents **[37]** à **[40]** décrivent ce type de post-traitement bien connu de l'homme du métier dans la fabrication des vessies notamment de réservoir de type IV, et utilisables sur la vessie obtenue par le procédé de la présente invention.

Selon l'invention, la vessie peut être soumise à une post-cuisson destinée à atteindre plus rapidement les caractéristiques finales du matériau. Dans la présente invention, cette post-cuisson sera éventuellement effectuée ultérieurement lors de la mise en oeuvre de la structure composite externe.

La présente invention permet donc la fabrication de vessies d'étanchéité en polymère thermodurcissable par exemple en polyuréthanne, susceptibles d'entrer dans la fabrication de tout réservoir composite destiné au stockage et en particulier au stockage de gaz sous pression. Les vessies, enveloppes, d'étanchéité fabriquées par le procédé de l'invention sont plus performantes en termes de propriétés thermomécaniques que celles de l'art antérieur.

Les polymères thermodurcissables mis en oeuvre selon l'invention n'ont pas de température de fusion et en outre il n'y a plus d'effets de coupure de chaînes, d'oxydation, de réticulation, de polycondensation, de porosité finale, de contraintes résiduelles ou d'inhomogénéité, etc., inhérents aux phénomènes de fusion et de solidification des polymères thermoplastiques lors de leur mise en oeuvre par rotomoulage.

Ces propriétés améliorées se répercutent évidemment toutes sur les propriétés des réservoirs qui sont fabriqués à partir de ces vessies.

Selon l'invention, on peut fixer au moins une embase de réservoir à l'intérieur du rotomoule avant de mettre en oeuvre l'étape (b) de manière à ce que l'embase de réservoir soit incorporée à l'enveloppe, vessie, d'étanchéité lors de la polymérisation. Lorsque l'enveloppe fabriquée est petite (par exemple pour un petit réservoir) une seule embase peut être suffisante. Pour une enveloppe de grande taille (par exemple pour un réservoir de grande taille), on préfère placer deux embases, notamment pour permettre un remplissage et une vidange rapide du réservoir. L'embase (ou les embases) peut (peuvent) être placée (placées) à une extrémité (aux deux extrémités) de l'enveloppe, en particulier lorsqu'elle a une forme allongée, mais il est aussi possible de placer une ou plusieurs parmi ces embases sur la longueur de l'enveloppe, quelque part entre les extrémités.

Selon l'invention, ladite, au moins une, embase métallique assure la connexion entre l'intérieur et l'extérieur du réservoir pour son remplissage et pour l'utilisation du fluide par exemple du gaz, stocké. L'embase peut être une embase classiquement utilisée pour ce type de réservoir, par exemple une embase en aluminium ou en acier. Il peut s'agir aussi d'une embase en polymère, en céramique ou en matériau composite. Une ou plusieurs embase(s) peuvent être disposée(s) dans le moule pour obtenir une ou plusieurs embases sur l'enveloppe fabriquée. La ou les embase(s) peut (peuvent) être soumise(s) à un traitement destiné à améliorer encore l'étanchéité de la jonction embase/enveloppe. Ce traitement peut être par exemple un traitement tel que celui décrit dans le document **[6].**

L'inclusion d'une ou plusieurs embase(s) sur l'enveloppe peut être réalisée suivant les procédés classiques connus de l'homme du métier, par exemple suivant les procédés décrits dans les documents **[6]** et [41], ou dans un des documents précités où au moins une embase est prévue. Dans la présente invention, pour être joint à l'embase, le polymère thermodurcissable est formé par polymérisation des précurseurs à la fois dans le moule et sur la ou les embases, prétraitées ou non, positionnées dans le moule avant le rotomoulage suivant le procédé de la présente invention. La ou les embase(s) peut (peuvent) être positionnée(s) par exemple de la manière décrite dans le document **[41].**

L'enveloppe (appelée également « vessie » ou « liner », selon le terme anglais) obtenue suivant le procédé de l'invention, munie de la ou des embase(s), est ensuite démoulée. Grâce au procédé de la présente invention, le risque de fuite au niveau des embases est fortement diminué, car lors du rotomoulage, la viscosité des précurseurs en début de polymérisation est très faible et il diffuse très facilement dans les interstices et/ou les points d'accroche de l'embase.

La présente invention se rapporte également à un réservoir de stockage d'un fluide sous pression, selon la revendication 29.

Le fluide peut être tel que défini ci-dessus, il peut s'agir par exemple d'un gaz sous pression.

Ledit gaz sous pression peut être choisi parmi l'hydrogène, les gaz inertes (appelés également « gaz neutres ») tels que l'hélium et l'argon, le gaz naturel, l'air, l'azote, les hydrocarbures tels que le méthane, et les mélanges de ceux-ci tels que l'argonite (mélange d'argon et d'azote) et l'hytane (mélange d'hydrogène et de méthane).

Ledit réservoir est généralement un réservoir composite.

Par exemple, ledit réservoir composite peut comprendre dans cet ordre, de l'intérieur du réservoir vers l'extérieur de celui-ci, au moins :
- ladite enveloppe interne ou vessie (2) d'étanchéité,
- au moins une embase (4) par exemple métallique, et
- un renfort mécanique (6) externe à l'enveloppe.

L'enveloppe interne peut être telle que définie ci-dessus. Dans ce type de réservoir, elle est le plus souvent appelée « vessie » (« liner » en anglais).

L'embase ou les embases peut/peuvent être telle(s) que définie(s) ci-dessus. S'il y a plusieurs embases, elles peuvent être identiques ou différentes.

Selon l'invention, le renfort mécanique externe de l'enveloppe assure la tenue mécanique du réservoir. Il peut s'agir de l'un quelconque des renforts connus de l'homme du métier disposés habituellement autour des enveloppes de réservoirs, par exemple de type III ou IV. Il peut s'agir par exemple d'un enroulement filamentaire. Cet enroulement filamentaire peut être constitué par exemple de fibres de carbone et de résine thermoplastique ou thermodurcissable, avantageusement. Par exemple, les fibres de carbone préalablement imprégnées de résine époxy non réticulée peuvent être enroulées autour de l' enveloppe maintenue par la ou les embases, par exemple suivant l'un des procédés décrits dans les documents **[6], [7], [42]** ou **[43].** L'enveloppe, qui dans l'exemple particulier d'un réservoir de type IV, est une structure autosupportée, sert en fait de mandrin à cet enroulement filamentaire. Un réservoir de type IV peut ainsi être obtenu.

L'enveloppe fabriquée selon l'invention avec un polymère thermodurcissable permet donc d'obtenir un réservoir composite de type IV dont les performances mécaniques et barrières sont bien supérieures à celles d'un même réservoir dont la vessie est constituée d'un polymère thermoplastique et est fabriquée par extrusion soufflage, thermoformage, injection ou rotomoulage « classique » ou « réactif ».

La présente invention est particulièrement adaptée pour la fabrication de réservoir alimentant des piles à combustible, en particulier à basse température.

Le fait d'utiliser des réservoirs d'hydrogène comprimé pour les PEMFC, notamment pour les applications tels que les moyens de transport (par exemple voiture, bus, etc.) nécessite d'avoir des autonomies suffisantes, c'est-à-dire d'embarquer le plus d'hydrogène possible, ce qui se fait en augmentant la pression de service du réservoir jusqu'à 7x10⁷ Pa (700 bars) et même davantage. De plus, pour les applications transport, les réservoirs doivent de préférence être légers, ce qui implique l'utilisation de réservoirs composites de type III ou mieux encore de type IV.

Grâce au procédé de la présente invention, l'enveloppe peut avoir une épaisseur telle qu'elle supporte une pression de service du réservoir, telle que définie plus haut, et généralement comprise entre 10⁷ et 10⁸ Pa (entre 100 et 1000 bars), de préférence de 5.10⁷ à 8.10⁷ Pa. La composition de la présente invention peut donc être avantageusement utilisée pour la fabrication d'un réservoir de type IV, par exemple tel que précité.

Le procédé de fabrication de l'enveloppe qui met en oeuvre un polymère thermodurcissable tel qu'un polyuréthanne permet également de fabriquer une enveloppe d'étanchéité utilisable pour la fabrication d'accumulateurs hydrauliques ou hydropneumatiques. Une telle enveloppe résiste en effet avantageusement à des pressions variables pouvant aller par exemple de la pression atmosphérique (10⁵ Pa) à 10⁸ Pa et à des températures de remplissage de 100 à 180°C.

De manière plus générale, la composition de la présente invention et le procédé de mise en oeuvre par rotomoulage peuvent être utilisés pour différentes applications telles que :
- Vessie d'étanchéité (« liner ») de réservoir composite ;
- vessie d'étanchéité (« liner ») de réservoir de type IV ;
- revêtement interne (« coating ») de vessie insuffisamment étanche de réservoir de type IV (apport de la propriété barrière au gaz) ;
- revêtement interne de vessie métallique, par exemple en aluminium ou en acier, de réservoir de type III (apport de la propriété barrière au gaz pour limiter les effets de fragilisation et/ou corrosion sous contrainte ou à l'eau pour limiter les effets de corrosion) ;
- revêtement interne de réservoir de type I ou de type II; etc.

Ainsi, la formulation spécifique des compositions mises en oeuvre par moulage en rotation dans le procédé de l'invention qui conduisent à des polymères thermodurcissables tels que des polyuréthannes peuvent être utilisées chaque fois qu'une propriété barrière est recherchée (liquide ou gaz ou mélange liquide + gaz) avec éventuellement une bonne souplesse mécanique (déformation élastique sans fatigue) et avec éventuellement une tenue thermomécanique sur une large plage de température, typiquement de -60 à +150°C par exemple de -40°C à + 130°C, sans altération des propriétés précédentes.

Le rotomoulage réactif utilisé dans la présente invention permet la réalisation d'un produit fini rapidement (quelques minutes), en un nombre limité d'étapes. L'étape de rotomoulage en est facilitée et le coût énergétique en est diminué grâce à des températures plus basses que celles utilisées dans les procédés de l'art antérieur. L'environnement est moins critique que dans l'art antérieur puisqu'une atmosphère inerte et/ou sèche n'est plus requise. L'industrialisation est donc plus aisée.

De plus, le polymère thermodurcissable tel que le polyuréthanne final synthétisé in situ possède des propriétés améliorées en matière de tenue thermomécanique notamment comme on peut le voir au travers des exemples ci-dessous. Enfin, il est très facile de modifier les propriétés finales du polymère par le choix de la nature et/ou de la quantité des précurseurs tels que les isocyanates et polyols, , des catalyseurs, et des additifs et/ou charges appropriés.

D'autres avantages pourront encore apparaître à l'homme du métier à la lecture des exemples ci-dessous, illustrés par les dessins annexés, donnés à titre illustratif et non limitatif.

### Brève description des dessins

- La figure 1 est un graphique qui donne l'évolution de la température T mesurée (en °C) en fonction du temps t (en minutes) lors de l'essai de l'exemple 3. La température du moule est indiquée en trait gras et celle de l'air interne du moule en trait fin.
- La figure 2 est un graphique qui donne le module de perte E" (MPa) à 1,00 Hz en fonction de la température en (°C) lors d'un essai de DMTA (Analyse ThermoMécanique Dynamique) réalisée sur la vessie préparée dans l'exemple 3.
- La figure 3 représente schématiquement un exemple d'architecture d'un réservoir (1) de type (IV) fabriqué à partir d'une enveloppe, vessie (2) obtenue par le procédé selon l'invention.

### EXEMPLES

### Exemple 1 : Exemple de précurseurs pour préparer une composition selon la présente invention

Les précurseurs utilisés dans les exemples ci-dessous pour préparer des mélanges de polymérisation conformes à la présente invention sont les suivants :
- précurseur GYROTHANE^{®} (marque commerciale déposée) de grade 900 ou 909, fabriqué par la société RAIGI (fournisseur), constitué principalement de polyéther polyols de type polyoxypropylène glycol , d'amines aromatiques (modificateur de chaîne), d'additifs (zéolithe), de noirs de carbone et de catalyseur de type métallique.
- précurseur RAIGIDUR^{®} (marque commerciale déposée) de grade FPG, fabriqué par la société RAIGI (fournisseur), constitué d'isocyanate de type prépolymère à base de MDI.

### Exemple 2 : Exemple d'un dispositif pour mettre en oeuvre le procédé de l'invention

Le mélange des réactifs peut être réalisé manuellement ou avantageusement avec une machine d'injection. Cette dernière possède deux réservoirs de préférence thermostatés pour chacun des précurseurs, un agitateur mécanique intégré à chacun des réservoirs et une pompe doseuse pour chacun des réservoirs. Le mélange est réalisé soit dans une tête de mélange dynamique soit dans un mélangeur statique (jetable ou non), en sortie de tête. Cet appareillage permet de réaliser des mélanges de polymérisation avec des quantités plus importantes de précurseurs, ayant une meilleure homogénéité, une meilleure reproductibilité et une meilleure précision. Enfin, la durée de mélange est beaucoup plus courte (quelques secondes) que lorsque le mélange des précurseurs est réalisé manuellement. Par exemple, une machine d'injection de type TWINFLOW SVR, commercialisée par la société LIQUID CONTROL peut être utilisée.

Le mélange de polymérisation peut être directement injecté dans le rotomoule.

L'appareil de rotomoulage utilisé dans ces exemples est de type shuttle, de marque STP Equipment et de référence LAB40, le chauffage du four du rotomoule est quant à lui électrique.

Avant l'injection du mélange de polymérisation, des inserts métalliques telles que des embases peuvent être fixés dans le rotomoule, de la manière décrite dans le document **[41],** après avoir éventuellement été soumis à un traitement de surface tel que décrit dans le document **[6].**

L'injection du mélange peut être réalisée par l'orifice de l'embase en utilisant éventuellement une cannule pour en faciliter l'introduction.

### Exemple 3 : Réalisation d'une enveloppe (vessie) et tests sur la composition de l'invention

Les réactifs utilisés dans cet exemple sont ceux décrits dans l'exemple 1. La composition utilisée est la suivante, exprimée en % en poids : 39% en masse précurseurs polyols de marque GYROTHANE^{®} de grade 909 et 61% en masse de précurseurs isocyanates de marque RAIGIDUR^{®} de grade FPG. Dans cet exemple, la quantité totale de matière utilisée est de 600 g. Le volume de l'enveloppe est d'environ 6 L pour une épaisseur de 3 mm. Le mélange est réalisé par une machine de marque TWINFLOW SVR et commercialisée par la société LIQUID CONTROL. Le polyol et le catalyseur sont introduits dans un réservoir en acier inoxydable et l'isocyanate dans l'autre. Ces réservoirs sont chacun connectés par une pompe doseuse qui délivre la bonne quantité de chacun des précurseurs puis les mélange grâce à un mélangeur statique à éléments multiples. Cet appareillage permet donc de réaliser le mélange de polymérisation et d'introduire la quantité déterminée de matière en 5 secondes directement à l'intérieur du rotomoule. Le rotomoule en aluminium de 8 mm d'épaisseur est préchauffé à une température de 40°C.

L'introduction de matière terminée, le moule est mis en rotation à une vitesse d'axe primaire de 9 tr/min et d'axe secondaire de 3 tr/min. Le rapport des vitesses de rotation (rapport primaire/secondaire) est égal à 3.

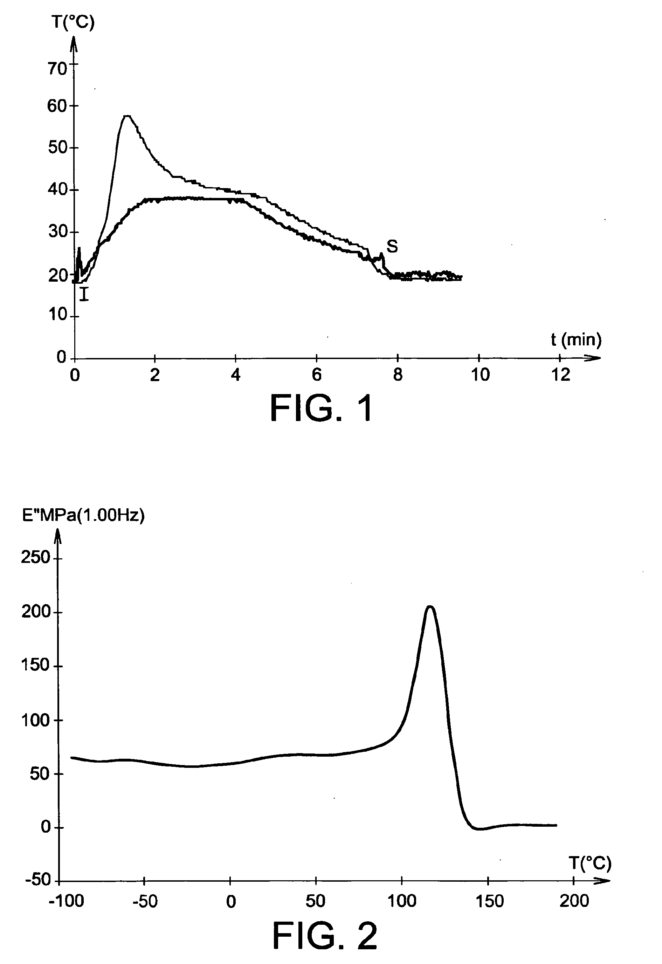

La figure 1 regroupe les mesures de températures effectuées au cours de cet essai.

La température du moule est indiquée en trait gras et celle de l'air interne en trait fin. L'introduction de la matière est repérée par le point I, le point S indiquant la sortie du moule du four pour le démoulage. Le dépassement de la courbe de température du moule par celle de l'air interne est due à l'exothermie de la réaction de polymérisation

A partir de ces courbes, le procédé utilisé pour cet exemple peut être décrit de la manière suivante :
1. chauffage du moule à vide. Cette étape est facultative et plus rapide que dans la voie fondue compte tenu du fait que le moule est vide et que les températures sont faibles.
2. Sortie du four et arrêt de la rotation du moule.
3. Introduction du mélange de polymérisation dans le moule, caractérisée par une chute de température du moule, la matière introduite étant plus froide.
4. Mise en rotation du moule et entrée du moule dans le four.
5. Réticulation, caractérisée par un exotherme.
6. Sortie du four, arrêt de la rotation et démoulage. Le refroidissement n'est pas nécessaire compte tenu de la température employée.

L'enveloppe ainsi formée n'est ni oxydée, ni dégradée ; le polymère n'a pas subi de coupures de chaînes et ne présente ni infondus ni porosités résiduelles. Des tests montrant les propriétés physiques de ces pièces sont exposés ci-après (exemple 4).

### Exemple 4 : Propriétés de l'enveloppe, vessie en polyuréthanne obtenue dans l'exemple 3

### A. Comportement mécanique en traction de la pièce en polyuréthanne obtenue dans l'exemple 3

Des essais de traction ont été réalisés selon la norme ISO 527 sur des éprouvettes haltères de type H2 (longueur utile de 25 mm) à une vitesse de traverse de 25 mm/min. Les résultats sont présentés dans le Tableau 2 suivant.

**Tableau 2 : caractérisation des propriétés en traction**

| Température d'essai (°C) | Module d'élasticité (MPa) | Déformation à la rupture (%) εr | Contrainte Max (MPa) σmax |
|---|---|---|---|
| 22°C | 1800 MPa | 17 % | 76 MPa |

La vessie d'étanchéité en polyuréthanne obtenue est suffisamment rigide pour permettre le bobinage des fibres de carbone du composite par enroulement filamentaire. La déformation mécanique (ductilité) de la vessie d'étanchéité en polyuréthanne obtenue est suffisante pour permettre un bon cyclage du réservoir lors des phases de remplissage/vidage du gaz.

### B. Analyse ThermoMécanique Dynamique (« DMTA »)

Un essai de DMTA a été réalisé sur un échantillon issu de la vessie d'étanchéité obtenue.

L'analyse thermique mécanique dynamique (DMTA) permet de déterminer les propriétés mécaniques d'un échantillon de polymère soumis à une sollicitation cyclique donnée, à température fixe ou variable. La machine d'essai utilisée est de marque NIETZCH et de modèle DMA 242. Le module de perte E" a été mesuré à 5°K/mi, et 1 Hz.

La courbe de E" (voir figure 2) montre qu'il n'y a aucune modification des propriétés mécaniques du polymère de la vessie entre -50°C et 100°C.

La valeur donnée sur le graphe n'est pas choquante : contrairement à un polymère thermoplastique, le polymère mis en oeuvre selon l'invention ne va pas se liquéfier mais perdra de son module, en restant intrinsèquement le même matériau.

Le module dit « de perte » est proportionnel à l'énergie dissipée par la déformation irréversible du matériau. L'augmentation du module de perte est significatif du passage de la transition d'un état à un autre comme par exemple la transition vitreuse.

Sur la figure 2, au-delà de la température de transition vitreuse (120°C) le matériau gagne en souplesse mais ne se liquéfie pas. Cette transition est réversible.

### C. Performance Barrière à l'Hydrogène Gazeux

Des mesures de perméation à l'hydrogène ont été réalisées sur des échantillons de forme de disque de 2 mm d'épaisseur et 30 mm de diamètre et à 25°C et sous une pression relative de 50 bars. Les résultats obtenus (cf. Tableau 3) montrent que l'enveloppe d'étanchéité à de bonnes propriétés barrières à l'hydrogène et que son utilisation comme vessie de réservoir de type IV est possible pour une pression de service de 350 et 700 bars (35 et 70 MPa).

**Tableau 3 : Propriétés de perméation à l'hydrogène (pression de 50,45 bars et température de 26,7°C)**

| Flux (mbar.l/s) | Temps atteinte régime stationnaire (heures) | Coefficient de perméation Pe (mol/m.Pa.s) | Coefficient de diffusion D (m²/s) |
|---|---|---|---|
| 1.10⁵ | 35,3 | 6,8 10⁻¹⁶ | 8,1 10⁻¹¹ |

### Exemple 5 : Réalisation d'une enveloppe selon le procédé de l'invention

Les réactifs utilisés dans cet exemple sont ceux décrits dans l'exemple 1. La composition utilisée est la suivante, exprimée en % en poids : 31.4% de GIROTHANE® de grade 909, 7,8% de GIROTHANE® de grade 900 et 60,8% de RAIGIDUR® de grade FPG. Dans cet exemple, la quantité totale de matière utilisée est de 5676 g. Le volume de l'enveloppe est d'environ 80 L pour une épaisseur de 4 mm. Le mélange est réalisé manuellement ou idéalement par une machine TWINFLOW SVR de LIQUID CONTROL. Les précurseurs polyols sont introduits dans l'un des deux réservoirs en acier inoxydable et le précurseur isocyanate dans l'autre. Ces réservoirs sont chacun connectés à une pompe doseuse qui assure le rapport des composés et les contraint à passer à travers un mélangeur statique à éléments multiples. Cet appareillage permet donc de réaliser le mélange et d'introduire la quantité déterminée de matière en 30 secondes directement à l'intérieur du rotomoule préalablement revêtu d'agent démoulant et stabilisé à température ambiante ou préchauffé localement à une température de 40°C.

L'introduction de matière terminée, le moule est mis en rotation à une vitesse d'axe primaire de 7,2 tr/min et d'axe secondaire de 1,5 tr/min. Le moule est en acier de 3 mm d'épaisseur. Le rapport des vitesses de rotation (rapport primaire/secondaire) est égal à 4,8. Lorsque la matière est à 20°C et elle-même introduite dans le rotomoule à 20°C, l'exothermie usuelle de la réaction conduit à une élévation de 30 à 40°C supplémentaires en environ 5 minutes. La pièce est maintenue en rotation pendant 15 minutes avant de démouler. L'étape de démoulage peut éventuellement être précédée de 5 minutes de refroidissement obtenu, par exemple par une ventilation forcée, pour améliorer la rigidité de la pièce au démoulage.

La pièce obtenue a une forme de ballon de rugby avec une longueur entre pôles de 1400 mm, un diamètre maximal de 400 mm et un volume interne de 80 L.

### Exemple 6 : Fabrication d'un réservoir de type IV

Le réservoir (1) fabriqué est représenté sur la figure annexée. Dans cet exemple, l'enveloppe (E) fabriquée dans l'exemple 3, munie de son embase (4), est munie d'une structure (6) de renfort. Pour cela, des fibres de carbone préalablement imprégnées de résine époxy non réticulée sont enroulées autour de l'enveloppe maintenue par l'embase (la vessie sert de mandrin) suivant l'un des procédés décrits dans les documents **[4]**, **[5], [24]** ou **[25].**

Quelques couches de fibres de verre imprégnées de résine époxyde non réticulée sont ensuite enroulées comme pour les fibres de carbone. Le réservoir bobiné est alors placé dans une étuve tournante pour faire durcir la résine époxyde.

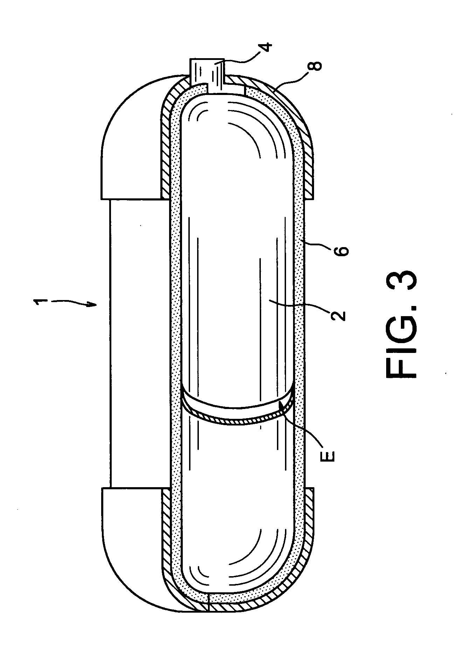

Une coque de protection (8) peut ensuite être disposée autour de l'enroulement filamentaire comme représenté en coupe sur la figure 3. Une valve/détendeur peut être vissée sur le réservoir, dans l'embase (non représenté).

Un réservoir de type IV est ainsi obtenu. Ce réservoir présente les spécifications d'étanchéité précitées.

### Exemple 7 : Post-traitement d'une vessie obtenue selon le procédé de l'invention

Une enveloppe fabriquée suivant le procédé de la présente invention, par exemple suivant le protocole de l'exemple 2, peut être soumise à un post-traitement tels que ceux cités dans la partie exposé de l'invention ci-dessus, afin d'améliorer ses propriétés d'étanchéité ainsi que ses propriétés chimique de surface interne et/ou externe.

Des exemples de post-traitement applicables à la vessie sont décrits dans les documents **[26]** et **[27]** de la liste annexée des références.

### Liste des références

[1] FR-A-2 871 091 : « Procédé de fabrication d'une vessie d'étanchéité d'un réservoir de type IV et réservoir de type IV »
[3] FR-A-2 813 232 : Procédé de fabrication d'une pièce de révolution par rotomoulage et pièce obtenue
[4] FR-A-2 813 235 : Structure et réservoir thermoplastique
[5] US-A-4 927 038 : "Container for high pressure gases"
[6] US-A-4 925 044 : "Fluid tank and method of manufacturing it"
[7] US-A-5 499 739 : "Thermoplastic liner for and method of overwrapping high pressure vessels"
[8] US-A-6 554 939 : "Container and method of forming the container"
[9] US-A-5 568 878 : "Filament wound pressure vessel having a reinforced access opening"
[10] US-A-6 660 214 : "Pressure vessel manufacture method"
[11] US-B1-6 298 553 : "Composite pressure vessel with heat exchanger"
[12] Patent Abstract of Japan, vol. 1995, n°10 "manufacture of pressure vessel"
[13] US-A-4 705 468 : "Apparatus for rotationally casting a plastic tank liner having an access fitting"
[14] WO-A2-03/069217 : "Twin-walled liner for high-pressure vessels"
[15] US 5 647 503 : "Tank for storing pressurized gas"
[16] US 6 090 465 : "Reinforced composite structures"
[17] US 4 932 403 : "Flexible container for compressed gases"
[18] US 5 036 845 : "Flexible container for compressed gases"
[19] US 6 651 659 : "Ambulatory storage system for pressurized gases"
[20] US 6 866 042 : "Conserver for pressurized tank"
[21] "Hydrogen Storage Gaps and Priorities. Hydrogen Implementing Agreement", Trygve RIIS, communication orale, IAE Hydrogen Coordination Group, Paris, November 29, 2004
[22] "Next generation hydrogen tankage", Laurence Livermore National Laboratroy, proceedings of the 2001 U.S. DOE Hydrogen Program Review
[23] "Hydrogen composite tank program", Quantum Technologies, proceedings of the 2002 U.S. DOE Hydrogen Program Review
[24] "Hydrogen composite tank project", Quantum Fuel System Technologies, FY 2003, Progress Report
[25] "Development of a Compressed Hydrogen Gas Integrated Storage System (CH2-ISS) for Fuel Cell Vehicles", University Applied Physics Laboratory, FY 2003 Progress Report.
[26] "Next Generation Hydrogen Storage", Laurence Livermore National Laboratory, FY 2003 Progress Report
[27] "Low Permeation Liner for Hydrogen Gas Storage Tanks", Idaho National Engineering & Environmental Laboratory, FY 2003 Progress Report
[28] "Low cost, high efficiency, high pressure hydrogen storage", Quantum Technologies Inc., DOE Hydrogen Fuel Cells & Infrastructures Technologies Program Review, May 2004
[29] "The hydrogen fuel cells and infrastructure technologies (HFCCIT) program multi-year program plan", U.S. Department of Energy, May 1, 2003
[30] "Development and validation testing of hydrogen fast-fill fueling algorithms", Williams E. LISS, Mark E. RICHARDS, Kenneth KOUNTZ, Kenneth KRIHA, Gas Technology Institute, USA
[31] "Modeling and testing of fast-fill control algorithms for hydrogen fueling", 2003 National Hydrogen Association Meeting, Mars 2003
[32] "Application of plastic-lined composite pressure vessels for hydrogen storage", John A. EIHUSEN, Lincoln, USA
[33] "Fast fill test of 35MPa hydrogen for high pressure cylinder" Kiyotaka KAKIHARA, Koichi OSHINO, Jinji SUZUKI, Shogo WATANABE, JARI Research Journal, vol. 26, N°6
[34] "Thermal effects related to H2 fast filing in high pressure vessels depending on vessels types and filing procedures : modelling, trials and studies", K. BARRAL, E. WERLEN, R. RENAULT, Proceedings of the European Hydrogen Energy Conference, September 2003, Grenoble, France
[35] "Hydrogen refuelling stations : safe filling procedures", J-Y. FAUDOU, J-Y LEHMAN, S. PREGASSAME, AIR LIQUIDE
[36] http://www.rotomoulage.org
[37] "Etude de la nature de couches barrières à l'oxygène réalisées par plasma basse fréquence en fonction des conditions d'élaboration", Eric Bouvier, Université Paul Sabatier de Toulouse, soutenue le 14/09/99, n°d'ordre 3457
[38] "Trends in Barrier Design", May 1991, Journal Packaging, Japan
[39] US-A-6,328,805 : "Equipment for processing using a low-pressure plasma having an improved vacuum circuit"
[40] US-A-5,902,643 : "Multilayer packaging material having aminoepoxy gas barrier coating".
[41] US-A-5,38,680 : "Method of molding a polar boss to a composite pressure vessel"
[42] US-A-6,171,423 : "Method for fabricating composite pressure vessels"
[43] US-A-5,577,630 : "Composite conformable pressure vessel"

## Revendications

1. Procédé de fabrication d'une vessie en polymère assurant l'étanchéité interne d'un réservoir vis-à-vis d'un fluide sous pression qui s'y trouve contenu, ledit fluide étant sous une pression d'au moins 50 bars, de préférence d'au moins 200 bars, de préférence encore d'au moins 350 bars, mieux d'au moins 700 bars ; dans lequel ledit polymère est un polymère thermodurcissable, et ledit procédé comprend au moins une étape de polymérisation d'au moins deux composés précurseurs dudit polymère thermodurcissable réalisé dans un moule en rotation.

2. Procédé selon la revendication 1, dans lequel la vessie en polymère est autosupportée.

3. Procédé selon la revendication 1, dans lequel la vessie est de forme cylindrique à fonds hémisphériques.

4. Procédé selon l'une quelconque des revendications précédentes, dans lequel la polymérisation du polymère thermodurcissable dans le moule en rotation est initiée à une température de 10 à 100°C.

5. Procédé selon l'une quelconque des revendications précédentes, dans lequel la vessie est fabriquée en une durée de 4 à 8 minutes.

6. Procédé selon l'une quelconque des revendications précédentes, dans lequel ledit réservoir est un réservoir composite.

7. Procédé selon la revendication 6, dans lequel le réservoir est un réservoir de type IV.

8. Procédé selon l'une quelconque des revendications précédentes, dans lequel le fluide est un gaz ou un mélange d'un gaz et d'un liquide.

9. Procédé de fabrication d'une vessie en polymère selon l'une quelconque des revendications précédentes, ledit procédé comprenant les étapes successives suivantes :
(a) préparation d'un mélange de polymérisation comprenant les composés précurseurs du polymère thermodurcissable, et éventuellement au moins un catalyseur de la polymérisation ;
(b) polymérisation dudit mélange pour obtenir ledit polymère thermodurcissable dans un moule en rotation, de manière à former ladite vessie par polymérisation desdits précurseurs et rotomoulage simultané du polymère thermodurcissable ;
(b1) éventuellement répétition des étapes (a) et (b) de façon à obtenir une vessie à plusieurs couches de polymère thermodurcissable ; et
(c) démoulage de la vessie en polymère thermodurcissable obtenue.

10. Procédé selon la revendication 9, dans lequel la polymérisation du polymère thermodurcissable dans le moule en rotation est initiée à une température de 10 à 100°C, par exemple de 40°C.

11. Procédé selon l'une quelconque des revendications 9 et 10, dans lequel, préalablement à l'étape (b) la température du mélange de polymérisation est régulée à une valeur de 10 à 100°C par exemple de 25°C.

12. Procédé selon l'une quelconque des revendications 9 à 11, dans lequel la température du moule est régulée, par exemple par chauffage, en totalité ou en partie, préalablement à l'étape (b) à une valeur de 10 à 120°C, par exemple de 40°C

13. Procédé selon l'une quelconque des revendications 9 à 12, dans lequel le moule à la forme d'une pièce de révolution creuse.

14. Procédé selon la revendication 13, dans lequel ledit moule a une forme sensiblement cylindrique, avec un rapport longueur/diamètre de 1 à 50, habituellement de 2 à 10.

15. Procédé selon l'une quelconque des revendications 9 à 14, dans lequel le moule est mis en rotation suivant deux axes, de manière à ce que la répartition dudit mélange de polymérisation se fasse sur toute la surface interne du moule et conformément à celle-ci.

16. Procédé selon l'une quelconque des revendications 9 à 15, dans lequel le mélange de polymérisation comprend en outre une ou plusieurs charges et/ou nanocharges.

17. Procédé selon la revendication 16, dans lequel les charges et/ou les nanocharges sont choisies parmi les feuillets d'argile, les noirs de carbone, les nanotubes de carbone, les silices, les carbonates, les kaolins, les dolomies,les autres charges minérales, les pigments, les zéolites et les charges organiques.

18. Procédé selon l'une quelconque des revendications 9 à 17, dans lequel le mélange de polymérisation comprend en outre un ou plusieurs additifs choisis parmi les antioxydants, les stabilisants, les plastifiants, les agents mouillants, les agents débullants, les agents ignifugeants, les colorants et les solvants liquides.

19. Procédé selon l'une quelconque des revendications 9 à 18, dans lequel le mélange de polymérisation comprend en outre un modificateur de chaîne.

20. Procédé selon l'une quelconque des revendications précédentes, dans lequel le polymère thermodurcissable est un polyuréthanne.

21. Procédé selon la revendication 20, dans lequel les précurseurs comprennent au moins un polyol et au moins un isocyanate.

22. Procédé selon l'une quelconque des revendications 9 à 21, dans lequel le mélange est préparé à partir de plusieurs prémélanges contenant chacun au moins un précurseur du polymère.

23. Procédé selon la revendication 22, dans lequel le mélange est préparé à partir de deux prémélanges, l'un des prémélanges (A) contenant un ou des polyol(s), éventuellement un (ou des) catalyseur(s), une ou des charge(s) et un ou des additif(s) ; et l'autre prémélange (B) contenant un ou des isocyanates et éventuellement un ou des additifs.

24. Procédé selon la revendication 23, dans lequel l'autre prémélange (B) contient un prépolymère à terminaisons isocyanates.

25. Procédé selon la revendication 22, dans lequel l'un des prémélanges (A) contient un ou des polyol(s) et éventuellement un ou plusieurs modificateurs de chaîne.

26. Procédé selon la revendication 9, dans lequel on répète un cycle d'étapes (a) et (b) pour former une vessie d'étanchéité à plusieurs couches de polymères, identiques ou différentes, en épaisseur et/ou en composition.

27. Procédé selon la revendication 26, dans lequel on commence l'étape (a) d'un cycle, avant que l'étape (b) d'un cycle précédent ne soit entièrement terminée.

28. Procédé selon l'une quelconque des revendications 9 à 27, dans lequel on fixe au moins une embase de réservoir à l'intérieur du moule avant de mettre en oeuvre l'étape (b) de manière à ce que l'embase de réservoir soit incorporée à la vessie lors de la polymérisation.

29. Réservoir (1) de stockage d'un fluide sous pression, ledit fluide étant sous une pression d'au moins 50 bars, de préférence d'au moins 200 bars, de préférence encore d'au moins 350 bars, mieux d'au moins 700 bars, et ledit réservoir comprenant une enveloppe interne ou vessie d'étanchéité en polymère (2) obtenue par le procédé selon l'une quelconque des revendications 1 à 28.

30. Réservoir selon la revendication 29 qui est un réservoir composite.

31. Réservoir composite selon la revendication 30, ledit réservoir comprenant dans cet ordre, de l'intérieur du réservoir vers l'extérieur de celui-ci, au moins :
- ladite enveloppe interne ou vessie (2) d'étanchéité,
- au moins une embase (4), et
- un renfort mécanique (6) externe à l'enveloppe.

32. Réservoir composite selon la revendication 31, dans lequel ladite vessie d'étanchéité est une vessie en polyuréthanne.

33. Réservoir composite selon l'une quelconque des revendications 31 et 32, dans laquelle ladite, au moins une embase est une embase métallique.

34. Réservoir composite selon l'une quelconque des revendications 31 à 33, dans lequel ledit renfort mécanique externe est un enroulement filamentaire constitué par exemple de fibres de carbone et de résine thermoplastique ou thermodurcissable par exemple de résine époxy.

35. Réservoir selon l'une quelconque des revendications 29 à 34, dans lequel le fluide est un gaz sous pression.

36. Réservoir selon la revendication 35, dans lequel le gaz sous pression est choisi parmi les gaz inertes tels que l'hélium et l'argon, l'air, l'azote, l'hydrogène, le gaz naturel, les hydrocarbures tels que le méthane, et les mélanges de ceux-ci tels que l'argonite et l'hytane.

37. Réservoir selon l'une quelconque des revendications 29 à 36, dans lequel l'enveloppe a une épaisseur telle qu'elle permet une pression de service du réservoir comprise entre 10⁷ et 10⁸ Pa, de préférence de 5.10⁷ à 8.10⁷ Pa.

38. Réservoir selon l'une quelconque des revendications 29 à 37, ledit réservoir étant un réservoir de type IV.

39. Réservoir selon l'une quelconque des revendications 29 à 38, dans lequel ladite vessie est autosupportée.

40. Réservoir selon l'une quelconque des revendications 29 à 39, dans lequel ladite vessie est de forme cylindrique à fonds hémisphériques.

## Claims

1. Method for manufacturing a polymer bladder assuring the internal sealing of a tank vis-à-vis a pressurized fluid which is contained therein, wherein said fluid is under a pressure of at least 50 bars, preferably at least 200 bars, even more preferably at least 350 bars, most preferably at least 700 bars; wherein said polymer is a thermosetting polymer, and said method comprises at least one step of polymerising at least two precursor compounds of said thermosetting polymer carried out in a mould in rotation.

2. Method according to claim 1, in which the polymer bladder is self-supporting.

3. Method according to claim 1, in which the bladder is of cylindrical shape with hemispheric bottoms.

4. Method according to any one of the preceding claims, in which the polymerisation of the thermosetting polymer in the mould in rotation is initiated at a temperature from 10 to 100°C.

5. Method according to any one of the preceding claims, in which the bladder is manufactured in a time from 4 to 8 minutes.

6. Method according to any one of the preceding claims, in which said tank is a composite tank.

7. Method according to claim 6, in which the tank is a type IV tank.

8. Method according to any one of the preceding claims, in which the fluid is a gas or a mixture of a gas and a liquid.

9. Method for manufacturing a polymer bladder according to any of the preceding claims, said method comprising the following successive steps:
(a) preparation of a polymerisation mixture comprising the precursor compounds of the thermosetting polymer, and optionally at least one polymerisation catalyst;
(b) polymerisation of said mixture to obtain said thermosetting polymer in a mould in rotation, so as to form said bladder by polymerisation of said precursors and simultaneous rotomoulding of the thermosetting polymer;
(b1) optionally repetition of steps (a) and (b) so as to obtain a bladder with several layers of thermosetting polymer; and
(c) removal from the mould of the thermosetting polymer bladder obtained.

10. Method according to claim 9, in which the polymerisation of the thermosetting polymer in the mould in rotation is initiated at a temperature from 10 to 100°C, for example 40°C.

11. Method according to any one of claims 9 and 10, in which, prior to step (b), the temperature of the polymerisation mixture is regulated to a value of 10 to 100°C for example 25°C.

12. Method according to any one of claims 9 to 11, in which the temperature of the mould is regulated, for example by heating, totally or partially, prior to step (b) to a value of 10 to 120°C, for example 40°C

13. Method according to any one of claims 9 to 12, in which the mould has the shape of a hollow revolving part.

14. Method according to claim 13, in which said mould has a substantially cylindrical shape, with a length/diameter ratio of 1 to 50, normally from 2 to 10.

15. Method according to any one of claims 9 to 14, in which the mould is rotated along two axes, so that the distribution of said polymerisation mixture takes place over the whole internal surface of the mould and in conformity with said internal surface.

16. Method according to any one of claims 9 to 15, in which the polymerisation mixture further comprises one or several fillers and/or nanofillers.

17. Method according to claim 16, in which the fillers and/or the nanofillers are chosen among clay flakes, foils, carbon blacks, carbon nanotubes, silicas, carbonates, kaolins, dolomites, other mineral fillers, pigments, zeolites and organic fillers.

18. Method according to any one of claims 9 to 17, in which the polymerisation mixture further comprises one or several additives chosen among antioxidants, stabilisers, plasticizers, wetting agents, debubblizing agents, fire retarding agents, colorants and liquid solvents.

19. Method according to any one of claims 9 to 18, in which the polymerisation mixture further comprises a chain modifier.

20. Method according to any one of the preceding claims, in which the thermosetting polymer is a polyurethane.

21. Method according to claim 20, in which the precursors comprise at least one polyol and at least one isocyanate.

22. Method according to any one of claims 9 to 21, in which the mixture is prepared from several premixtures each containing at least one precursor of the polymer.

23. Method according to claim 22, in which the mixture is prepared from two premixtures, one of the premixtures (A) containing one or several polyol(s), optionally one (or several) catalyst(s), one or several filler(s) and one or several additive(s); and the other premixture (B) containing one or several isocyanates and optionally one or several additives.

24. Method according to claim 23, in which the other premixture (B) contains a prepolymer with isocyanate terminations.

25. Method according to claim 22, in which one of the premixtures (A) contains one or several polyol(s) and optionally one or several chain modifiers.

26. Method according to claim 9, in which a cycle of steps (a) and (b) is repeated to form a sealing bladder with several layers of polymers, identical or different in thickness and/or in composition.

27. Method according to claim 26, in which step (a) of a cycle is begun before step (b) of a previous cycle has completely finished.

28. Method according to any one of claims 9 to 27, in which at least one tank socket, boss is fixed to the inside of the mould before implementing step (b) so that the tank socket, boss is incorporated in the bladder during the polymerisation.

29. Pressurized fluid storage tank (1), said fluid being under a pressure of at least 50 bars, preferably at least 200 bars, even more preferably at least 350 bars, most preferably at least 700 bars and said tank comprising an internal envelope or sealing bladder made of polymer (2) obtained by the method according to any one of claims 1 to 28.

30. Tank according to claim 29 which is a composite tank.

31. Composite tank according to claim 30, said tank comprising in this order, from the interior of the tank towards its exterior, at least:
- said internal sealing envelope or bladder (2),
- at least one socket, boss (4), and
- a mechanical reinforcement (6) external to the envelope.

32. Composite tank according to claim 31, in which said sealing bladder is a bladder made of polyurethane.

33. Composite tank according to any one of claims 31 and 32, in which said at least one socket, boss is a metallic socket, boss.

34. Composite tank according to any one of claims 31 to 33, in which said external mechanical reinforcement is a filament winding consisting for example of carbon fibres and thermoplastic or thermosetting resin for example epoxy resin.

35. Tank according to any one of claims 29 to 34, in which the fluid is a pressurized gas.

36. Tank according to claim 35, in which the pressurized gas is chosen among inert gases such as helium and argon, air, nitrogen, hydrogen, natural gas, hydrocarbons such as methane, and mixtures thereof such as argonite and hytane.

37. Tank according to any one of claims 29 to 36, wherein the envelope has a thickness such that it enables a service pressure of the tank between 10⁷ and 10⁸ Pa, preferably from 5.¹⁰⁷ to 8.¹⁰⁷ Pa.

38. Tank according to any one of claims 29 to 37, wherein said tank is a type IV tank.

39. Tank according to any one of claims 29 to 38, in which said bladder is self-supporting.

40. Tank according to any one of claims 29 to 39, in which said bladder is of cylindrical shape with hemispheric bottoms.

## Patentansprüche

1. Verfahren zur Herstellung einer Blase aus einem Polymer, die die Innendichtheit eines Behälters gegenüber einem darin enthaltenen, unter Druck stehenden Fluid sicherstellt, wobei das Fluid unter einem Druck von wenigstens 50 bar, vorzugsweise wenigstens 200 bar, bevorzugter wenigstens 350 bar, besser wenigstens 700 bar steht und das Polymer ein wärmehärtbares Polymer ist und das Verfahren wenigstens einen Schritt der Polymerisation wenigstens zweier Vorläuferverbindungen des wärmehärtbaren Polymers in einer Rotationsform umfasst.

2. Verfahren gemäß Anspruch 1, bei dem die Blase aus einem Polymer selbsttragend ist.

3. Verfahren gemäß Anspruch 1, bei dem die Blase zylinderförmig mit halbkugelförmigen Böden ist.

4. Verfahren gemäß einem der vorangehenden Ansprüche, bei dem die Polymerisation des wärmehärtbaren Polymers in der Rotationsform bei einer Temperatur von 10 bis 100 °C initiiert wird.

5. Verfahren gemäß einem der vorangehenden Ansprüche, bei dem die Blase in einem Zeitraum von 4 bis 8 Minuten hergestellt wird.

6. Verfahren gemäß einem der vorangehenden Ansprüche, bei dem der Behälter ein Verbundbehälter ist.

7. Verfahren gemäß Anspruch 6, bei dem der Behälter ein Behälter des Typs IV ist.

8. Verfahren gemäß einem der vorangehenden Ansprüche, bei dem das Fluid ein Gas oder ein Gemisch aus einem Gas und einer Flüssigkeit ist.

9. Verfahren zur Herstellung einer Blase aus einem Polymer gemäß einem der vorangehenden Ansprüche, wobei das Verfahren die folgenden, aufeinanderfolgenden Schritte umfasst:
(a) Herstellung eines Polymerisationsgemischs, das die Vorläuferverbindungen des wärmehärtbaren Polymers und gegebenenfalls wenigstens einen Polymerisationskatalysator umfasst;
(b) Polymerisation des Gemischs in einer Rotationsform unter Erhalt des wärmehärtbaren Polymers, um so durch Polymerisation der Vorläufer und gleichzeitiges Rotationsformen des wärmehärtbaren Polymers die Blase zu bilden;
(b1) gegebenenfalls Wiederholen der Schritte (a) und (b), so dass eine Blase mit mehreren Schichten aus einem wärmehärtbaren Polymer erhalten wird; und
(c) Entformung der erhaltenen Blase aus einem wärmehärtbaren Polymer.

10. Verfahren gemäß Anspruch 9, bei dem die Polymerisation des wärmehärtbaren Polymers in der Rotationsform bei einer Temperatur von 10 bis 100 °C, zum Beispiel 40 °C, initiiert wird.

11. Verfahren gemäß einem der Ansprüche 9 und 10, bei dem vor Schritt (b) die Temperatur des Polymerisationsgemischs auf einen Wert von 10 bis 100 °C, zum Beispiel 25 °C, eingestellt wird.

12. Verfahren gemäß einem der Ansprüche 9 bis 11, bei dem die Temperatur der Form, zum Beispiel durch Erhitzen in Gänze oder zum Teil, vor Schritt (b) auf einen Wert von 10 bis 120 °C, zum Beispiel 40 °C, eingestellt wird.

13. Verfahren gemäß einem der Ansprüche 9 bis 12, bei dem die Form die Form eines hohlen Drehteils aufweist.

14. Verfahren gemäß Anspruch 13, bei dem die Form eine im Wesentlichen zylindrische Form mit einem Länge/Durchmesser-Verhältnis von 1 bis 50, üblicherweise von 2 bis 10, aufweist.

15. Verfahren gemäß einem der Ansprüche 9 bis 14, bei dem die Form so um zwei Achsen in Rotation versetzt wird, dass die Verteilung des Polymerisationsgemischs auf der gesamten Innenfläche der Form und dieser entsprechend erfolgt.

16. Verfahren gemäß einem der Ansprüche 9 bis 15, bei dem das Polymerisationsgemisch außerdem einen oder mehrere Füllstoffe und/oder Nanofüllstoffe umfasst.

17. Verfahren gemäß Anspruch 16, bei dem die Füllstoffe und/oder Nanofüllstoffe aus Blättertonen, Rußen, Kohlenstoffnanoröhren, Siliciumoxiden, Carbonaten, Kaolinen, Dolomiten, anderen mineralischen Füllstoffen, Pigmenten, Zeolithen und organischen Füllstoffen ausgewählt sind.

18. Verfahren gemäß einem der Ansprüche 9 bis 17, bei dem das Polymerisationsgemisch außerdem einen oder mehrere Zusatzstoffe umfasst, die aus Antioxidantien, Stabilisatoren, Weichmachern, Netzmitteln, Entschäumern ("agents débullants"), Flammschutzmitteln, Farbstoffen und flüssigen Lösungsmitteln ausgewählt sind.

19. Verfahren gemäß einem der Ansprüche 9 bis 18, bei dem das Polymerisationsgemisch außerdem ein Kettenmodifizierungsmittel umfasst.

20. Verfahren gemäß einem der vorangehenden Ansprüche, bei dem das wärmehärtbare Polymer ein Polyurethan ist.

21. Verfahren gemäß Anspruch 20, bei dem die Vorläufer wenigstens ein Polyol und wenigstens ein Isocyanat umfassen.

22. Verfahren gemäß einem der Ansprüche 9 bis 21, bei dem das Gemisch aus mehreren Vormischungen, die jeweils wenigsten einen Polymervorläufer enthalten, hergestellt wird.

23. Verfahren gemäß Anspruch 22, bei dem das Gemisch aus zwei Vormischungen hergestellt wird, wobei die eine Vormischung (A) ein Polyol oder Polyole, gegebenenfalls einen Katalysator oder Katalysatoren, einen Füllstoff oder Füllstoffe und einen Zusatzstoff oder Zusatzstoffe enthält und die andere Vormischung (B) ein Isocyanat oder Isocyanate und gegebenenfalls einen Zusatzstoff oder Zusatzstoffe enthält.

24. Verfahren gemäß Anspruch 23, bei dem die andere Vormischung (B) ein Präpolymer mit Isocyanatenden enthält.

25. Verfahren gemäß Anspruch 22, bei dem die eine Vormischung (A) ein Polyol oder Polyole und gegebenenfalls ein oder mehrere Kettenmodifizierungsmittel enthält.

26. Verfahren gemäß Anspruch 9, bei dem eine Abfolge der Schritte (a) und (b) zum Bilden einer Dichtungsblase mit mehreren, in der Dicke und/oder Zusammensetzung gleichen oder verschiedenen Polymerschichten wiederholt wird.

27. Verfahren gemäß Anspruch 26, bei dem der Schritt (a) einer Abfolge begonnen wird, bevor der Schritt (b) einer vorangehenden Abfolge nicht vollständig beendet ist.

28. Verfahren gemäß einem der Ansprüche 9 bis 27, bei dem wenigstens ein Behälteransatz so im Inneren der Form angebracht wird, bevor Schritt (b) ausgeführt wird, dass der Behälteransatz während der Polymerisation in die Blase eingebaut wird.

29. Lagerbehälter (1) für ein unter Druck stehendes Fluid, wobei das Fluid unter einem Druck von wenigstens 50 bar, vorzugsweise wenigstens 200 bar, bevorzugter wenigstens 350 bar, besser wenigstens 700 bar steht und der Behälter eine durch das Verfahren gemäß einem der Ansprüche 1 bis 28 erhaltene Innenhülle oder Dichtungsblase (2) aus einem Polymer umfasst.

30. Behälter gemäß Anspruch 29, der ein Verbundbehälter ist.

31. Verbundbehälter gemäß Anspruch 30, wobei der Behälter in der Reihenfolge vom Inneren des Behälters bis zu dessen Äußerem wenigstens
- die Innenhülle oder Dichtungsblase (2),
- wenigstens einen Ansatz (4) und
- eine äußere mechanische Verstärkung (6) für die Hülle umfasst.

32. Verbundbehälter gemäß Anspruch 31, wobei die Dichtungsblase eine Blase aus Polyurethan ist.

33. Verbundbehälter gemäß einem der Ansprüche 31 und 32, wobei der wenigstens einen Ansatz ein Ansatz aus Metall ist.

34. Verbundbehälter gemäß einem der Ansprüche 31 bis 33, wobei die äußere mechanische Verstärkung eine Faserwicklung ist, die sich zum Beispiel aus Kohlenstofffasern und thermoplastischem oder wärmehärtbarem Harz wie zum Beispiel Epoxyharz zusammensetzt.

35. Behälter gemäß einem der Ansprüche 29 bis 34, wobei das Fluid ein unter Druck stehendes Gas ist.

36. Behälter gemäß Anspruch 35, wobei das unter Druck stehende Gas aus Inertgasen wie etwa Helium und Argon, Luft, Stickstoff, Wasserstoff, Erdgas, Kohlenwasserstoffen wie etwa Methan und deren Gemischen wie etwa Argonit und Hytan ausgewählt ist.

37. Behälter gemäß einem der Ansprüche 29 bis 36, wobei die Hülle eine solche Dicke aufweist, dass sie einen Betriebsdruck des Behälters zwischen 10⁷ und 10⁸ Pa, vorzugsweise von 5.10⁷ bis 8.10⁷, gestattet.

38. Behälter gemäß einem der Ansprüche 29 bis 37, wobei der Behälter ein Behälter des Typs IV ist.

39. Behälter gemäß einem der Ansprüche 29 bis 38, wobei die Blase selbsttragend ist.

40. Behälter gemäß einem der Ansprüche 29 bis 39, wobei die Blase zylinderförmig mit halbkugelförmigen Böden ist.
